# EUROPEAN PATENT SPECIFICATION

(11) **EP 3 055 173 B1**
(45) Date of publication and mention of the grant of the patent: **11.12.2019**
(21) Application number: 14781606.0
(22) Date of filing: 09.10.2014
(51) Int. Cl.: B60T 7/20, B60T 8/17, B60T 13/26, B60T 13/66, B62D 53/08

(54) **VEHICLE BRAKING METHODS AND RELATED APPARATUSES**
FAHRZEUGBREMSVERFAHREN UND ENTSPRECHENDE VORRICHTUNGEN
PROCÉDÉS DE FREINAGE DE VÉHICULE ET APPAREILS ASSOCIÉS

(30) Priority: 11.10.2013 IT MO20130286
(43) Date of publication of application: 17.08.2016
(73) Proprietor: CNH Industrial Italia S.p.A., 10135 Torino (IT)
(72) Inventor: MORSELLI, Riccardo, I-41057 San Vito di Spilamberto (MO) (IT); PARAVIZZINI, Pier Paolo, I-10040 Rivalta di Torino (TO) (IT); VENTURINI, Giorgio, I-44011 Bando (FE) (IT); SEDONI, Enrico, I-41126 Modena (IT); PESCE, Marco, 14049 Nizza Monferrato (AT) (IT)
(74) Representative: CNH Industrial IP Department
(86) International application number: PCT/EP2014/071691
(87) International publication number: WO 2015/052293

(56) References cited:
- EP-A1- 2 269 880
- WO-A1-2004/048171
- WO-A1-2007/008150
- DE-A1-102008 023 380
- DE-A1-102008 028 981
- DE-A1-102010 033 558
- GB-A- 2 486 474
- US-A1- 2008 309 156
- US-A1- 2011 029 210
- US-A1- 2013 085 649

## Description

The invention relates to a method of and apparatus for braking a coupled tractor-trailer combination.

It is well known for agricultural and other tractors to tow trailing vehicles. Numerous examples exist in many branches of transportation technology. The invention is particularly applicable in the case of an agricultural tractor towing an un-powered trailer such as a grain or beet trailer, hay wagon, mower, forage harvester, baler or similar vehicle that requires the traction of the tractor to effect movement.

The invention is also applicable in other situations in which a trailer is towed. Examples include but are not limited to articulated goods vehicles; combinations of military tractors/cabs and towed vehicles; and two-vehicle forestry and snowmobile trains.

A further area in which the invention is useful is that of tractors the frames of which are articulated to provide a steering effect about a mid-point, with driven wheels or other ground-engaging members (such as powered tracks) attached to both front and rear articulating parts. Such vehicles are sometimes referred to as "bi-directional" tractors or articulated tractors. Relatively small, wheeled examples of such tractors are employed e.g. in grass cultivation work and forestry; and very large scale machines, sometimes including tracks as the ground-engaging members, are used on large farms.

When the tractor is fitted with four ground-engaging wheels (or other members such as tracks) the invention is useable regardless of whether all four, or just two, of the wheels (or tracks, if present) are driven by the tractor engine.

The foregoing vehicle combinations and types are referred to generally herein as "tractor-trailer combinations".

The phenomenon of jack-knifing can arise in use of a tractor-trailer combination. In this situation forces exerted forwardly by the trailer via the trailer hitch (i.e. the coupling to the tractor), or in the case of a 4WD bi-directional tractor by the rear half of the articulated chassis via the steering articulation, can cause dangerous oversteer in the combination.

In an extreme case the forwardly exerted trailer force can exceed the grip of the ground-engaging members of the tractor, with the result that the tractor slews, possibly violently, in a skid situation. Even if no skidding occurs however the driver/operator of a tractor-trailer combination that undergoes jack-knifing or the precursor to jack-knifing may find that the combination becomes impossible to control.

The jack-knife situation therefore is usually extremely dangerous. Aside from the fact that the mass of the tractor-trailer combination (which may be several tens of tonnes in the case of a loaded agricultural trailer) moves uncontrolledly, perhaps at speeds of more than 30 km/h, there is also a danger of a rollover accident if any component of force generated by the trailer acts even for a short time in a direction tending to unlevel the tractor.

Tractor and trailer rollover accidents are often very serious. Even if a complete rollover does not occur during a jack-knife situation the contact area of the tyres of the driven wheels of the tractor may reduce, thereby adversely affecting the characteristics of the combination and for a further reason making it to harder to correct the jack-knife safely.

Jack-knifing is more likely during turning manoeuvres. This is partly because at such a time the line of application of any force exerted by the trailer through the trailer joint is not aligned with the longitudinal axis of the tractor, so a significant component of the forwardly acting force in effect exaggerates the turning moment acting on the tractor during the turn.

Also a tractor operator may have to concentrate on several variable factors while conducting a turn, and this may make him/her less alert to the possibility of a jack-knife occurring.

It is known to provide heavy trailers with brakes. Typically these are hydraulic, pneumatic or electric wheel braking systems the operation of which is linked to operation of the tractor brakes.

Although known trailer brakes assist the overall braking effort in a tractor-trailer combination they do not eliminate jack-knifing.

Publications nos. WO2013/004314 and WO2013/4315 describe situations in which inadequate trailer braking performance, relative to the mass of the trailer and its contents, and engine braking effects that arise when a tractor operator releases a throttle pedal or engine governor control, can cause jack-knifing.

WO2013/004314 and WO2013/4315 respectively describe highly effective closed loop and open loop control regimes for eliminating or at least significantly reducing the likelihood of jack-knifing arising from such causes.

The inventors have however identified further potential causes of jack-knifing and/or other adverse or unexpected behaviour of tractor-trailer combinations caused by trailer forces acting through the tractor-trailer joint, and also have identified additional improvements that can be effected when controlling the brakes of tractor-trailer combinations for example but not necessarily when using regimes such as those described in WO2013/004314 and WO2013/4315.

WO2007/008150A1 concerns a system and method of stabilising a tractor trailer combination by operating a trailer brake when a critical driving condition occurs.

EP2269880 discloses a system of stabilising a tractor trailer combination by operating a trailer brake when the trailer is pushing the tractor more than a threshold value.

According to the invention in a first aspect there is provided a method of controlling the motion of a coupled tractor-trailer combination in which the tractor includes a drive train having an engine and at least one ground-engaging member driveably connected thereto via an adjustable ratio transmission; and the trailer includes at least one ground engaging member having at least one trailer brake, the method comprising the steps of:
a. detecting whether one or more preconditions relating to tractor-trailer combination dynamics is/are occurring;
b. detecting whether one or more further prevailing conditions that are indicative of a likelihood of adverse tractor-trailer combination dynamics is/are occurring; and
c. if at least one said precondition and at least one said further condition are occurring, effecting a control action selected from the list including activating the at least one trailer brake and/or adjusting an adjustable parameter of the drive train in order to effect controlled deceleration of the tractor-trailer combination.

The method of the invention represents an improvement on the control action selection criteria used in the prior art. In particular the prior art does not address the contribution of prevailing preconditions to the likelihood of a jack-knife occurring. The method of the invention is based on the realisation that accounting for such preconditions as well as further conditions reduces the likelihood of jack-knifing occurring in a very effective manner.

Preferably the one or more preconditions relating to tractor-trailer combination dynamics is/are selected from the list including coasting of the tractor-trailer combination, the existence of one or more scenario conditions under which the tractor-trailer combination operates, or the detection of a fault likely to cause rapid deceleration of the tractor and hence the tractor-trailer combination. "Coasting" is further defined and explained herein.

In particular it is preferable that the method includes the step of determining that coasting is occurring when at least one of the following conditions is met:
d. the difference between a requested and an actual operational speed of a driven ground-engaging member of the tractor exceeds a first chosen threshold value; and/ or
e. the value of torque applied by the engine to the transmission is less than a second chosen threshold value; and/ or
f. the fuelling rate of the engine is less than a third chosen threshold value;and/ or
g. endurance braking (as explained herein) of the tractor-trailer combination is occurring;and/ or
h. the deceleration of the tractor is measured to be greater than a fourth chosen threshold value.

The tractor-trailer combination, and especially the tractor, may in accordance with embodiments of the invention include one or more sensors that generate signals (that typically are electrical or electronic signals) indicative of the various quantities that contribute to a determination of the likelihood of jack-knifing or other adverse behaviour.

Threshold values depend for instance on the mass of the tractor-trailer combination (including the mass of any load conveyed by the trailer); the power output of the tractor engine; the design of the tractor (and in particular its wheelbase and track dimensions, its mass and the diameter of its driven wheels); and the design, dimensions and performance of the brakes fitted to the tractor and the trailer.

Further preferably the tractor-trailer combination includes one or more sensors of the slope of a surface on which the tractor-trailer combination moves and the method includes the step of determining that one or more scenario conditions under which the tractor-trailer combination operates exists when an estimated value of the said slope attains or exceeds a fifth chosen threshold value.

Forward motion of the tractor-trailer combination is judged with reference to the fore-aft dimension of the tractor.

It is preferable that the method includes the step of determining that one or more scenario conditions under which the tractor -trailer combination is operating exists when
(a) the temperature of ambient air in the vicinity of the tractor-trailer combination is less than a threshold value and/or
(b) the radius of curvature of a turn executed by the tractor-trailer combination is less than a threshold value.

The temperature of ambient air can be measured by a sensor that is commonly provided in a vehicle such as an agricultural tractor. One of the purposes of monitoring the ambient temperature is to detect icy road or ground conditions.

Similarly, the radius of the curvature of a turn executed by the tractor-trailer combination may be measured by using a sensor that keeps track of the movement of the steering wheel, steering column or another part of the steering mechanism of the tractor. One of the purposes of monitoring the radius of curvature of a turn is to detect a corner radius that is too small for the tractor-trailer combination to complete safely.

In preferred embodiments of the method of the invention the tractor-trailer combination further includes (at least) sensors respectively of one or more engine and/or transmission faults, one or more sensors of the speed of the engine, one or more sensors of the net engine torque, one or more sensors of the application of one or more automatically applicable brakes of the tractor and/or the trailer and one or more sensors of failure of the drive train, the method including determining the detection of a fault likely to cause rapid deceleration of the tractor and hence the tractor-trailer combination when an engine or a transmission fault is sensed and the sensed engine speed is less than a sixth threshold value and the engine torque is less than a seventh threshold value or the application of one or more said automatically applicable brakes is sensed or a driveline failure is sensed.

The tractor-trailer combination includes an articulated joint connecting the tractor and trailer one to the other. The further prevailing conditions include one or more selected from the list comprising a measure of the aggressiveness of deceleration of the tractor-trailer combination attaining or exceeding an eighth chosen threshold value; or the angle subtended between the trailer and the tractor at the articulated joint attaining or exceeding a ninth chosen threshold value; or the value of a force acting on at least one ground-engaging member of the tractor attaining or exceeding a chosen percentage of a force corresponding to a limit of lateral stability of the ground-engaging member.

In more detail the method includes the step of determining that the aggressiveness of deceleration of the tractor-trailer combination attains or exceeds the eighth chosen threshold value when a target value of deceleration of at least one ground-engaging member of the tractor exceeds a tenth chosen threshold value and the forward speed of the tractor is less than an eleventh chosen threshold value and the ratio of the transmission is below a twelfth chosen threshold value.

Conveniently the tractor includes one or more steerable ground-engaging members movement of which away from a position corresponding to a straight-ahead position gives rise to a steering angle and the method includes the step of determining that the angle subtended between the trailer and the tractor at the articulated joint attains or exceeds a ninth chosen threshold value when the steering angle exceeds a thirteenth chosen threshold value.

Further preferably the thirteenth chosen threshold angle is in one non-limiting embodiment of the invention described in more detail herein chosen to be around 5 degrees. This can be measured for instance with reference to a notional fore-aft datum axis extending parallel to the length of the tractor-trailer combination and passing through a steerable ground-engaging member of the tractor forming part of the combination.

It is also preferable if the tractor includes one or more steerable ground-engaging members, movement of which away from a position corresponding to a straight-ahead position gives rise to a steering angle, and if the further prevailing conditions include the steering angle of at least one said steerable ground-engaging member of the tractor exceeding a fourteenth threshold value.

Preferably the tractor includes (at least) one or more sensors for sensing the lateral acceleration of the tractor and one or more sensors for sensing rotational deceleration of a ground engaging member of the tractor; and the method includes the step of determining that forces acting on at least one ground-engaging member of the tractor attain or exceed a chosen percentage of forces corresponding to a limit of lateral stability of the ground-engaging member when the value of lateral acceleration of the tractor attains or exceeds a fifteenth threshold value or the rotational deceleration of a said ground-engaging member attains or exceeds a sixteenth threshold value.

The foregoing features and preferred features of the method of the invention are of relevance to an accurate determination of whether a jack-knife or other adverse situation is likely to occur, and the automatic implementation of preventative steps when such a determination is reached. The preventative steps can be for example the application of the trailer brakes with a calculated braking force, reducing the torque provided by the engine, reducing the vehicle speed through automated operation of a throttle or engine governor control, and shifting of the ratio of the transmission of the tractor to a ratio less likely to induce problems. Combinations of such actions are possible and indeed are likely to be desirable within the scope of the method of the invention.

By "automatic implementation" is meant the implementation of the preventative steps regardless of any settings of the controls of the tractor-trailer combination effected by an operator located in the cab of the tractor. Thus in other words the method of the invention typically and preferably involves effecting preventative measures in a manner that at least temporarily overrides any control actions initiated or attempted by the operator.

In practical implementations of the invention as described in more detail below these actions may be effected through the combined operation of e.g. one or more sensors of the various quantities listed, one or more programmable microprocessors forming part of the control arrangement of the tractor, and the controllable hardware of the tractor-trailer combination such as the tractor and trailer brake control components, the tractor engine throttle control, the selection mechanism of e.g. a powershift or hydrostatic transmission forming part of the drive train and similar sub-systems of the combination.

In other, presently less preferred, embodiments of the invention however the preventative steps might involve displaying or otherwise conveying a message to the operator advising of a need to take preventative steps. Such a message could be displayed via a cab-mounted information screen. Examples of suitable messages might include "Reduce throttle setting" or "Shift transmission up" together with indications that the message is safety-related. Additionally or alternatively there might also be generated acoustic and/or light (or other visible) warnings.

The displaying of messages of this kind furthermore may take place, within the scope of the invention, in addition to the taking of steps involving adjusting the settings of various settable parameters of the tractor-trailer combination as described herein.

The inventors moreover have recognised in addition that it is desirable to apply the same levels of sophistication to the de-selection of preventative measures as described above, when a jack-knife situation is no longer likely, as to the application of those measures.

To this end in accordance with a second aspect of the invention there is provided a method of deactivating control of the motion of a coupled tractor-trailer combination in which the tractor includes a drive train having an engine and at least one ground-engaging member driveably connected thereto via an adjustable ratio transmission; and the trailer includes at least one ground engaging member having at least one trailer brake, the method comprising the steps of:
a. detecting termination of one or more preconditions relating to tractor-trailer combination dynamics;
b. detecting termination of one or more further conditions that are indicative of a likelihood of adverse tractor-trailer combination dynamics; and
c. if termination of at least one said precondition and/or at least one said further prevailing condition is detected, terminating a control action selected from the list including activating the at least one trailer brake and/or adjusting an adjustable parameter of the drive train.

This aspect of the invention relies on essentially the same inventive concept as the first aspect of the invention, with the exception that the criteria are applied in order to effect de-selection, as necessary, of the preventative measures. As a result the criteria preferably are adjusted as described herein.

Preferably the one or more preconditions relating to motion of the tractor-trailer combination is/are selected from the list including coasting of the tractor-trailer combination, the existence of one or more scenario conditions relating to the surface on which the tractor-trailer combination operates, or the detection of a fault likely to cause rapid deceleration of the tractor and hence the tractor-trailer combination.

Conveniently the method includes the step of determining the termination of coasting when at least one of the following conditions is met:
d. the difference between a requested and an actual operational speed of a driven ground-engaging member of the tractor becomes less than a seventeenth chosen threshold value; and/or
e. the value of torque applied by the engine to the transmission is attains or exceeds than a eighteenth chosen threshold value; and/or
f. the fuelling rate of the engine is attains or exceeds than an nineteenth chosen threshold value; and/or
g. endurance braking of the tractor-trailer combination is not occurring. Conveniently the tractor-trailer combination includes one or more sensors of the slope of a surface on which the tractor-trailer combination moves and the method includes the step of determining that one or more scenario conditions relating to the surface on which the tractor-trailer combination operates does not exist when an estimated value of the said slope is less than a twentieth chosen threshold value.

Preferably, the method includes the step of determining that one or more scenario conditions under which the tractor -trailer combination does not exist when
(a) the temperature of ambient air in the vicinity of the tractor-trailer combination is greater than a threshold value and/or
(b) the radius of curvature of a turn executed by the tractor-trailer combination is greater than a threshold value.
In more detail the tractor-trailer combination preferably includes one or more sensors respectively of one or more engine and/or transmission faults, one or more sensors of the speed of the engine, one or more sensors of the net engine torque, one or more sensors of the application of one or more automatically applicable brakes of the tractor and/or the trailer and one or more sensors of failure of the drive train, and the method includes determining the termination of a fault likely to cause rapid deceleration of the tractor and hence the tractor-trailer combination when no engine or transmission fault is sensed and the sensed engine speed is greater than a twenty-first threshold value; and the engine torque is greater than a twenty-second threshold value; or the releasing of one or more said automatically applicable brakes is sensed; or sensing of a driveline failure terminates; and the method includes as a result terminating a said control action.

The tractor-trailer combination includes an articulated joint connecting the tractor and trailer one to the other and the further conditions include one or more selected from the list comprising the value of a measure of the aggressiveness of deceleration of the tractor-trailer combination becoming less than a twenty-third chosen threshold value; or the angle subtended between the trailer and the tractor at the articulated joint becoming less than a twenty-fourth chosen threshold value; or the value of a force acting on at least one ground-engaging member of the tractor becoming less than a chosen percentage of a force corresponding to a limit of lateral stability of the ground-engaging member.

These conditions may be determined by way of a refinement of the method of the invention including the step of determining that the aggressiveness of deceleration of the tractor-trailer combination has become less than the twenty-third chosen threshold value when the chosen threshold value and the forward speed of the tractor attains or exceeds a twenty-fifth chosen threshold value and a value corresponding to the transmission ratio of the variable ratio transmission of the tractor exceeds a twenty-sixth chosen threshold value.

Further preferably the method of the invention includes the step of determining that the value of a force acting on at least one ground-engaging member of the tractor is less than a chosen percentage of a force corresponding to a limit of lateral stability of the ground-engaging member when a value of lateral acceleration of the tractor is less than a twenty-seventh chosen threshold value and the value of the rotational deceleration of a said ground-engaging member is greater than a twenty-eighth threshold value.

A particularly advantageous feature of the invention is that preferably the seventeenth to twenty-eighth chosen threshold values respectively differ from the first to twelfth, fifteenth and sixteenth chosen threshold values. This means that the criteria used for initiation of a control action using the method of the first aspect of the invention differ from the criteria used for deactivation in the second aspect of the method. This in-built hysteresis prevents system instabilities that could arise if the activation and deactivation criteria were the same (since as a result any control apparatus employed to perform the method steps would not be subjected to ambiguous activation/deactivation signals).

In order to preserve the durability of the trailer brakes and to avoid overheating, it is preferable if the invention includes the step of measuring the time period during which the brakes are (first) activated in a single actuation and deactivating the brakes the time period is longer than a twenty-ninth threshold value,

Alternatively, the invention can include the method of measuring the actuation frequency of the trailer brakes and deactivating the brakes if the frequency is greater than a thirtieth threshold value.

The invention is also considered to reside in a tractor-trailer combination including one or more programmable devices, sensors and actuators, the one or more programmable devices being programmed to implement the steps of the method of any claim specified herein.

It is preferable that at least one said threshold value is time-varying and/or at least one said threshold value is fixed with respect to time.

It is also preferable that the deactivation of the trailer brakes is effected gradually. This is because when the trailer is braked to a situation in which the precondition and further prevailing condition are not met, an unsafe situation might still be created through control actions initiated voluntarily by the tractor operator.

Thus for example in a situation in which a tractor-trailer combination is coasting while cornering and the wheels start to skid the trailer brakes are activated, increasing tension at the tractor-trailer joint and thereby reducing the skidding. However, the operator may choose to switch from coasting to full throttle, which may create excessive skidding and reduce the lateral resistance of the driven wheels dramatically. This creates an unsafe situation wherein jack-knifing may occur, especially since the trailer brakes will not be activated as a precondition is not met. By delaying the release of the trailer brake, thereby giving rise to a gradual release, the unsafe situation is avoided.

For a gradual deactivation of the trailer brakes, a pulse-width modulation (PWM) signal may be used with variable frequency and amplitude, or a simple on/off signal may be employed.

There now follows a description of preferred embodiments of the invention, with reference being made to the accompanying drawings in which:
Figure 1 is a schematic representation of a typical tractor-trailer combination, illustrating how jack-knifing and other forms of instability can arise; and
Figure 2 is a schematic representation of apparatus forming parts of a combination such as that shown in Figure 1 and in accordance with the apparatus of the invention. The apparatus of Figure 2 is suitable for putting the methods of the invention into effect.

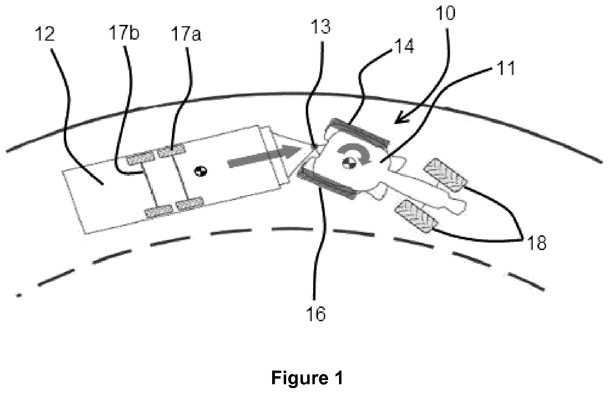

Referring to the drawings, Figure 1 illustrates the forces that may cause jack-knifing or similar instabilities in a tractor-trailer combination 10.

In Figure 1 a tractor 11 tows behind it a trailer 12 that is coupled to it by way of an articulated tractor-trailer joint or connection 13. In Figure 1 the tractor-trailer combination is shown turning on a roadway, but the invention is equally applicable when the combination is operating off-road and/or when travelling in a straight line. The invention furthermore is of benefit regardless of the surface on which the combination is travelling. Examples of such surfaces include but are not limited to dry and wet Tarmacadam roads, concrete, roadstone, ice, snow, grass, soil, mud, woodchip, granulated rubber and gravel.

In the example illustrated the tractor 11 is a two-wheel drive, wheeled agricultural tractor. As explained herein however the tractor 11 may take a range of other forms within the scope of the invention.

Similarly for purposes of illustrating the invention the trailer 12 is shown in Figure 1 as a twin-axle trailer having at least one, and in the embodiment illustrated two, braked axles 17a, 17b in which the left and right ground-engaging wheels are capable of being braked; but other designs of towed vehicle may, within the scope of the invention, be substituted for the trailer 12 shown.

The connection 13 is a conventional trailer towing joint. This means that the coupling between the tractor 11 and trailer 12 is articulated to permit the combination 10 to turn as illustrated in Figure 1; and that the coupling is relatively rigid in the fore- and aft-directions such that longitudinally acting forces between the trailer 12 and tractor 11 are transmitted without any appreciable attenuation.

In any situation therefore in which the tractor 11 decelerates more rapidly than the trailer 12 the mass MTRAILER of the trailer acts forwardly via the joint 13 and pushes the tractor 11 from behind with a force FINERTIAL_TRAILER. As shown by the large arrow in Figure 1 when such a force acts in a direction that is not aligned with the longitudinal axis of the tractor 11 the latter receives an offset force, at the rear, tending to slew the rear of the tractor off-centre.

If as illustrated in Figure 1 the steering wheels 18 of the tractor are turned, such forces exaggerate the steering of the tractor 11 such that oversteer occurs. The turning moment acting on the tractor as a result of these effects is represented schematically by the arcuate arrow in Figure 1.

As explained above, under some circumstances the force FINERTIALTRAILER is sufficient to overcome the grip of the rear, driven wheels 14, 16 of the tractor 11.

The inventors in WO2013/004314 and WO2013/004315 identified as a cause of potential jack-knifing or other instability of the motion of a tractor-trailer combination the phenomenon of engine braking, in which a tractor operator releases the throttle pedal of the tractor while remaining in a relatively low transmission ratio, in order to use the deceleration of the rotating parts of the engine of the tractor to slow the forward speed of the tractor-trailer combination or at any rate to cause the speed of the tractor-trailer combination to increase relatively slowly. Engine braking is used in various situations, for example when the tractor-trailer combination approaches a junction with clear visibility such that emergency deceleration of the combination is not required; or when descending a hill.

The inventors have however realised that a significant number of further situations can give rise to a force FINERTIAL_TRAILER that tends to reduce the predictability of the motion of the tractor-trailer combination and potentially can cause problems and accidents of the various kinds described above. A benefit of the invention is to take account of such situations and rapidly effect corrective or remedial actions in a manner that is superior to the ability of a tractor operator to deal with dangerous conditions.

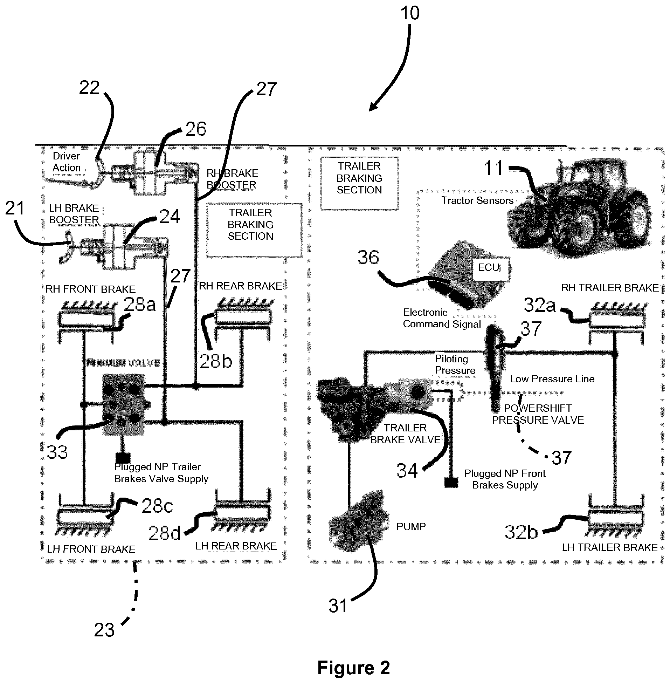

Figure 2 shows in schematic form certain key operative parts of one form of a tractor-trailer combination 10 according to the invention. Figure 2 for clarity omits certain interconnecting components the nature of which will be familiar to those of skill in the agricultural vehicle art.

In Figure 2 hydraulic pressure in a tractor brake circuit 23 is generated by the left and right brake pedals 21, 22 and associated brake boosters 24, 26 in hydraulic lines 27.

The hydraulic pressure activates the tractor brakes 28a, 28b, 28c, 28d. On activation of the brakes 28 the hydraulic pressure is piloted to a trailer brake valve 34 that is hydraulically connected to the tractor brake circuit on hitching of the trailer 12 of Figure 1 at the joint 13. The generation of trailer brake valve pressure causes hydraulic fluid pressurised by trailer brake pump 31 to operate the trailer brakes 32a, 32b.

The hydraulic pressure in the lines 27 may be sensed as described herein and used to develop electrical signals that are control parameters of the trailer braking effort. A plugged manifold 33 may generate a pressure signal that is input to a programmable electronic control unit (ECU) or similar device 36 that may be located e.g. in the trailer brake valve 34 or on board the tractor 11.

The ECU 36 also receives as inputs signals from:
- the engine ECU of the tractor 11, that can generate electronic signals indicative of the engine speed, throttle setting and torque output of the engine;
- depending on the design of the tractor, the shift valve 37 of a discrete-ratio transmission or equivalent component of a continuously variable transmission (CVT) of the tractor 11 from which it is possible to generate a signal indicative of the prevailing transmission ratio;
- one or more wheel speed sensors from which it is possible to calculate both the rotational speed of a ground-engaging member in the form of a wheel of the tractor 11 and also the acceleration/deceleration of the ground-engaging member in question and generate signals indicative of such data;
- one or more sensors that are capable of generating signals indicative of the rate of fuelling of the engine;
- one or more lateral acceleration sensors, using which it is possible to generate signals indicative of the lateral force applying to a wheel or other ground-engaging member of the tractor;
- one or more tractor accelerometers that generate signals indicative of the acceleration or deceleration of the tractor-trailer combination;
- one or more tractor forward speed sensors that generate signals indicative of forward speed as defined herein;
- one or more sensors of the steering angle of the steerable wheels (or other ground-engaging members) of the tractor;
- sensors indicative of application of the tractor brake(s) and the trailer brake(s) respectively; and
- a tractor inclinometer that generates signals indicative of the slope, especially as judged with reference to the fore-aft dimension, on which the tractor-trailer combination operates.

The sensors, ECU and sub-systems of the tractor-trailer combination are connected in a manner that permits their operative interaction. The ECU or another part of the tractor-trailer combination is programmable in a manner that permits execution of the methods described herein.

The parts of the tractor-trailer combination may of course be configured substantially differently than the arrangement shown schematically in Figure 2. Such variations in the hardware employed may be as a result of the tractor-trailer combination being a different type than the agricultural tractor and trailer having a hydraulic braking system as illustrated. Thus the tractor-trailer combination may be an agricultural tractor-trailer combination including for example a pneumatic braking system, a mechanical braking system, an electric braking system or some form of hybrid braking system; or it may be a non-agricultural tractor-trailer combination of one of the types outlined above. In the last-mentioned case hydraulic, pneumatic, mechanical, electric and/or hybrid braking systems are also possible within the scope of the invention.

Regardless of the precise tractor-trailer combination under consideration the methods of the invention rely primarily on the realisation that various factors contribute to the likelihood of jack-knifing or other motion instability of a potentially dangerous kind. Moreover the methods of the invention rely on the categorisation of those conditions either as preconditions, which make it more likely that instability would occur; or as prevailing conditions, which in the absence of one of the preconditions on it is own would not give rise to a potentially dangerous situation.

It is likely, as implied by their nomenclature, that any prevailing condition would be in existence for a shorter time than one or more of the preconditions, but this may not necessarily always be the case. In other words the preconditions are likely to be those (such as coasting, as explained below) that have an effect for a relatively long time; and the prevailing conditions are likely to be those (such as the aggressive depression of a brake pedal or the sudden releasing of a throttle pedal) that have a short duration but nonetheless may in conjunction with the prevailing conditions give rise to instability of the tractor-trailer combination.

The inventors further have realised that the method of the invention may be considered as either relating to the automatic initiation of remedial or preventative action that overrides certain vehicle settings that the operator may have set and that assists in eliminating the danger of an accident; or (when the potentially unstable or jack-knife conditions have terminated) ending the intervention with the result that the control of the tractor-trailer combination returns to the tractor operator.

Thus as stated herein the method of the invention, when considering initiation of a control action intended to eliminate or at least minimise the risk of a jack-knife or other dangerous condition, involves firstly detecting whether one or more or the preconditions exists; and as a further stage detecting whether one or more of the prevailing conditions for the time being exists such that a potentially dangerous situation has developed without the tractor operator realising this.

The method also involves, when a precondition and a prevailing condition are detected, automatically initiating a control action selected from the list including activating the at least one trailer brake and/or adjusting an adjustable parameter of the drive train in order to effect controlled deceleration of the tractor-trailer combination.

These steps are described in more detail below. For the avoidance of doubt it is here stated that the detection of the precondition(s) and prevailing condition(s) is the result of operation of one or more of the sensors described above, and the step of effecting of the control action is the result of the ECU or other programmable device sending appropriate commands to e.g. the trailer brake boost valves, the engine governor/throttle control, the transmission shift valve and so on. Such components therefore are of a type that can be piloted in this way, either through the generation of electronic control commands that are fed directly to the operative components; or through the generation e.g. in the manifold 33 or a similar component of a piloting pressure signal in hydraulic or pneumatic pilot lines such as line 37 shown schematically in Figure 2.

The brake(s) 32a, 32b of the trailer can if desired additionally be of a type including one or more emergency activation spring latches or similar mechanisms that can be released to drive the brake(s) to an "on" condition very rapidly. Such a mechanical activation feature of the trailer brake(s) is effective regardless of the state of health of e.g. the hydraulic braking circuit represented schematically in Figure 2, thereby rendering it suitable as an emergency brake.

As a consequence one possible control action could within the scope of the invention be the releasing of a latch for a spring or other energy storage mechanism that causes the rapid application of the trailer brakes in an emergency braking fashion. However other modes of applying the trailer brakes, and in particular the use of the hydraulic, pneumatic or electric (as appropriate for the hardware configuration present) braking circuit, are possible and typically may be preferred in the method of the invention.

As mentioned herein the one or more prevailing preconditions relating to motion of the tractor-trailer combination is/are selected from the list including coasting of the tractor-trailer combination, the existence of one or more scenario conditions under which the tractor-trailer combination operates, or the detection of a fault likely to cause rapid deceleration of the tractor and hence the tractor-trailer combination.

Considering in particular the existence of a coasting mode as a precondition this is in accordance with the method of the invention determined to be occurring when at least one of the following conditions is met:
a. the difference between a requested and an actual operational speed of a driven ground-engaging member of the tractor exceeds a first chosen threshold value; and/ or
b. the value of torque applied by the engine to the transmission is less than a second chosen threshold value; and/ or
c. the fuelling rate of the engine is less than a third chosen threshold value; and/ or
d. endurance braking of the tractor-trailer combination is occurring; and/ or
e. the deceleration of the tractor is measured to be greater than a fourth chosen threshold value.

The reason for the difference between a requested and an actual operational speed of a driven ground-engaging member of the tractor being a criterion contributing to a determination of whether coasting is occurring is that this avoids automatic intervention in accordance with other aspects of the invention when only a relatively small variation in the tractor speed, as may occur without inducing any danger, arises. Thus criterion a. improves the stability and robustness of the control philosophy of the invention.

Criterion b. is used because coasting can only be said to occur when the torque output of the tractor engine is negative or at least of a lower value than the friction torque of the engine and transmission. If this criterion was not applied an intervention might occur when a positive torque value exists, i.e. when the tractor is positively pulling the trailer and there is tension in the tractor-trailer joint 13. Clearly at such a time there is no danger of a jack-knife occurring.

A further indication of coasting is the condition (criterion c. above) that the fuelling system of the tractor engine does not inject fuel into the combustion chambers. This signifies either that the throttle pedal has been released, or perhaps that there is an engine fuelling fault. Either situation can lead to a significant engine braking effect that in turn can cause jack-knifing.

Criteria d. and e. are optional further criteria that indicate a possibility of jack-knifing.

Endurance braking may arise or indeed may be a programmed control mode of the tractor when the tractor and trailer brakes are applied for a period longer than a threshold time that can be programmed into the ECU 36 or another programmable device operatively connected to the brake operation sensors of the tractor-trailer combination. The application of the brakes for a lengthy period can lead to fade in the brakes of the trailer. Because the tractor brakes may be of a higher specification such fade might not manifest itself in the tractor brakes. In such a situation the force FINERTIAL_TRAILER can increase until it exceeds the braking performance of the tractor brakes and/or the grip of the tractor ground-engaging members, with potentially dangerous consequences. For these reasons it is desirable with the scope of the invention to be able to detect endurance braking as a precondition.

It moreover is desirable to detect relatively gentle deceleration of the combination for another reason not taken account of in the other criteria, since this too can lead to the force FINERTIAL_TRAILER rising to potentially dangerous levels. This explains the presence of criterion e. in the decision algorithm pertaining to coasting.

It is possible theoretically to define a range of scenario or environmental criteria as preconditions that increase the likelihood of a jack-knife occurring. As examples one may consider the combination of a low ambient air temperature and relatively high humidity that give rise to a risk of road icing. Such criteria are within the scope of the invention as broadly defined herein, but the most commonly encountered scenario criterion is whether the tractor-trailer combination is descending a slope of greater than a predetermined inclination, as specified above. In such a case FINERTIAL_TRAILER readily could exceed the braking performance of the tractor and/or the grip of the tractor tyres.

Equally if the tractor-trailer combination is travelling uphill the joint 13 is again in tension and a jack-knife cannot occur. Therefore a positive value of the slope in the forward direction of the combination is used as a criterion dictating that no control action is required, and the control of the invention therefore is made inoperative at such times.

The method includes as further criteria of the initiation of control actions aimed at controlledly braking the detection of one or more types of fault likely to cause rapid deceleration of the tractor and hence the tractor-trailer combination.

Modern agricultural tractors include various sensors that are capable of generating signals indicative of the health of electronic and other sub-systems of the vehicle. Such sensors are able to detect engine or transmission faults. The method of the invention preferably is such as to initiate a control action as explained herein when such an engine or a transmission fault is sensed and the sensed engine speed is less than a sixth threshold value and the engine torque is less than a seventh threshold value or the application of one or more said automatically applicable brakes is sensed or a driveline failure is sensed.

The detection of an engine fault or a detected engine speed or torque value that is low enough to correspond to stalling of the engine indicate a likelihood of the generation of a very high braking torque at the driven wheels or other ground-engaging members of the tractor. This can induce jack-knifing or other instability so these criteria are used as further initiators of control actions.

On detection of such criteria the control action in a typical tractor-trailer combination could take the form of the emergency application of the trailer brake(s), so that the trailer does not apply a force FINERTIAL_TRAILER that is likely to cause jack-knifing.

A failure of the driveline or drive train of the tractor can also produce a rapid deceleration effect at the tractor wheels but not braking the trailer. This therefore in accordance with the method of the invention is a further preferred activation criterion of the control action.

In any of the foregoing examples the control action typically will be the rapid application of the trailer brakes so that the value of FINERTIAL_TRAILER is maintained at a low enough level as not to cause instability or jack-knifing of the combination.

The first of the possible further prevailing conditions relates to the aggressiveness of non-brake induced deceleration caused by actions of the tractor operator. If the operator releases the throttle pedal sharply or down-shifts the transmission several ratios in a short period (or in the case of a continuously variable transmission rapidly moves the ratio setting lever over a major part of its range towards a low ratio) when the trailer is heavily loaded this can result in the value of FINERTIAL_TRAILER exceeding safe levels as explained herein. The control action effected in accordance with the invention in that case would be the application of a sufficient trailer braking force, sufficiently rapidly, as to avoid the risk of instability of the combination, or perhaps overriding of the transmission ratio setting so that a higher ratio than that selected by the operator applies.

The criteria used in the method of the invention to establish whether the aggressiveness of the deceleration demand exceeds the eighth chosen threshold value defined herein are that the "requested" wheel (or other ground-engaging member) deceleration value (which is the first derivative of the wheel speed value as sensed by sensors mentioned herein) arising from the operator's action(s) exceeds a threshold and the forward speed of the tractor-trailer combination exceeds a threshold such as but not limited to 30 km/h and furthermore that the ratio of the transmission is less than a further threshold (defined as the twelfth threshold value herein).

These criteria are applied because the transmission braking torque increases at low forward speeds when the transmission ratio is relatively low. At such times it is necessary to prevent unstable conditions from arising, but it is not necessary to apply control actions if for example the transmission ratio is relatively high. Thus this aspect of the method of the invention provides a way of discriminating between deceleration aggressiveness values that are likely to be problematic, and those that are not.

A further prevailing condition that can be used as a measure of whether to initiate the control actions described above is the angle subtended at the joint 13 between the tractor and the trailer.

There exists a known relationship between the steering angle of the steerable front wheels 18 of an agricultural tractor and the angle subtended at the joint 13. This relationship depends on the wheelbase of the tractor and therefore the appropriate expression corresponding to the tractor wheelbase may be programmed into the ECU 36 according to the tractor dimensions. Such programming typically would amount to factory-set or service technician-set firmware that could not be adjusted by the operator of the tractor.

As noted the tractor preferably includes one or more sensors of the steering angle and a signal indicative of this may be assessed in the ECU 36 to determine whether the steering angle attains or exceeds a threshold value (the thirteenth threshold value herein) that corresponds to the joint angle attaining or exceeding the ninth threshold value herein.

The value of the joint angle may in addition make the deceleration aggressiveness factor discussed above more acute. The joint angle estimated from the sensed steering angle therefore may in addition be used as a parameter in the aggressiveness algorithm. Thus for example the control logic may be made more sensitive to aggressive deceleration if the joint angle exceeds a further threshold.

Yet a further criterion of activation of the control logic, and hence of control actions, within the scope of the invention relates to the extent to which the limit of lateral stability of the tractor is approached.

Vehicle lateral stability is a concept relating to the likelihood of a tyred vehicle wheel to lock, and hence skid, for example when braking and turning occur simultaneously.

Vehicle lateral stability is related to both the lateral acceleration of the vehicle and the rotational deceleration of the wheel under consideration. The method of the invention to this end uses sensor signals indicative of these quantities to determine whether wheel locking is likely. Thus if the modulus of the sensed estimated value of lateral acceleration attains or exceeds a threshold (the fourteenth chosen threshold herein) or the sensed value of the rotational deceleration of one or both of the driven wheels 14 of the tractor attains or exceeds a further threshold value (herein the fifteenth threshold value) the software determines that the stability limit is being approached. In such a case a control action would be initiated in order to prevent wheel lock-up since this is extremely dangerous, amounting to a dynamic and sudden change in the coefficient of friction between the tractor tyres and the surface of the road on which the combination is moving.

As an example the chosen lateral acceleration threshold referred to above may as stated herein be 2 m/s2 or, for example, a dynamically calculated reference value that changes depending on the driving conditions sensed at the various sensors.

A second, related aspect of the invention relates to the termination of the control action(s) when the criteria giving rise to a need for such action(s) cease to exist.

In broad terms the tests of whether the control action(s) should terminate are the inverses of those set out above relating to the initiation of the control actions. The inventors however importantly have realised that the thresholds applying when terminating control action(s) must differ from those applying when initiating control action(s) because otherwise any software controller such as ECU 36 implementing the method of the invention could receive ambiguous signals that might cause control system instability, software overflow conditions or "hunting" of the control program between activation and deactivation.

Since the deactivation criteria represent inverses of the activation criteria (although using differing threshold values for the reasons explained above) it is not necessary to explain in detail the reasons why the criteria are significant in the various circumstances considered. As noted elsewhere herein the seventeenth to twenty-eighth threshold values correspond in character but differ in value to the first to twelfth, fifteenth and sixteenth threshold values. The steering angle on the other hand is not used in the method of the invention as a criterion of deactivation, so there is no deactivation counterpart of the thirteenth threshold value The steering angle and the radius of curvature of a turn are not the same variable.

As explained herein it may be desirable, as an optional feature of the method of invention, for the trailer brake deactivation to occur gradually. This may be effected e.g through pulse-width modulation (PCM) of the trailer brake command, or through use of an on-off command that initiates e.g. a gain control function for the trailer brake valve pressure that decreases gradually. Deactivation may be based on the same situation and threshold conditions as activation. For simplicity the gain control function may have a linear slope characteristic.

Overall the method and apparatus of the invention confer considerable safety improvements compared with the prior art.

The listing or discussion of an apparently prior-published document in this specification should not necessarily be taken as an acknowledgement that the document is part of the state of the art or is common general knowledge.

## Claims

1. A method of controlling the motion of a coupled tractor-trailer combination in which the tractor includes a drive train having an engine and at least one ground-engaging member driveably connected thereto via an adjustable ratio transmission; and the trailer includes at least one ground engaging member having at least one trailer brake, the method comprising the steps of:
a. detecting whether one or more preconditions relating to tractor-trailer combination dynamics is/are occurring;
b. detecting whether one or more further prevailing conditions that are indicative of a likelihood of adverse tractor-trailer combination dynamics is/are occurring; and
c. if at least one said precondition and at least one said further condition are occurring, effecting a control action selected from the list including activating the at least one trailer brake and/or adjusting an adjustable parameter of the drive train in order to effect controlled deceleration of the tractor-trailer combination; and
**characterized in that** the tractor-trailer combination includes an articulated joint connecting the tractor and trailer one to the other and the further prevailing conditions include one or more selected from the list comprising a measure of the aggressiveness of deceleration of the tractor-trailer combination attaining or exceeding a eighth chosen threshold value; or the angle subtended between the trailer and the tractor at the articulated joint attaining or exceeding a ninth chosen threshold value; or the value of a force acting on at least one ground-engaging member of the tractor attaining or exceeding a chosen percentage of a force corresponding to a limit of lateral stability of the ground-engaging member.

2. A method according to Claim 1 wherein the one or more preconditions relating to tractor-trailer combination dynamics is/are selected from the list including coasting of the tractor-trailer combination, the existence of one or more scenario conditions under which the tractor-trailer combination operates, or the detection of a fault likely to cause rapid deceleration of the tractor and hence the tractor-trailer combination.

3. A method according to Claim 2 including the step of determining that coasting is occurring when at least one of the following conditions is met:
d. the difference between a requested and an actual operational speed of a driven ground-engaging member of the tractor exceeds a first chosen threshold value; and/or
e. the value of torque applied by the engine to the transmission is less than a second chosen threshold value; and/or
f. the fuelling rate of the engine is less than a third chosen threshold value; and/or
g. endurance braking of the tractor-trailer combination is occurring; and/or
h. the deceleration of the tractor is measured to be greater than a fourth chosen threshold value.

4. A method according to Claim 2 or Claim 3 wherein the tractor-trailer combination includes one or more sensors of the slope of a surface on which the tractor-trailer combination moves and the method includes the step of determining that one or more scenario conditions under which the tractor-trailer combination operates exists when an estimated value of the said slope attains or exceeds a fifth chosen threshold value.

5. A method according to any preceding claim including the step of determining that one or more scenario conditions under which the tractor-trailer combination is operating exists when:
(a) the temperature of ambient air in the vicinity of the tractor-trailer combination is less than a threshold value and/or
(b) the radius of curvature of a turn executed by the tractor-trailer combination is less than a threshold value.

6. A method according to any of Claims 2 to 5 wherein the tractor-trailer combination includes sensors respectively of one or more engine and/or transmission faults, one or more sensors of the speed of the engine, one or more sensors of the net engine torque, one or more sensors of the application of one or more automatically applicable brakes of the tractor and/or the trailer and one or more sensors of failure of the drive train, the method including determining the detection of a fault likely to cause rapid deceleration of the tractor and hence the tractor-trailer combination when an engine or a transmission fault is sensed and the sensed engine speed is less than a sixth threshold value and the engine torque is less than a seventh threshold value or the application of one or more said automatically applicable brakes is sensed or a driveline failure is sensed.

7. A method according to Claim 1 including the step of determining that the aggressiveness of deceleration of the tractor-trailer combination attains or exceeds the eighth chosen threshold value when a target value of deceleration of at least one ground-engaging member of the tractor exceeds a tenth chosen threshold value and the forward speed of the tractor is less than an eleventh chosen threshold value and the ratio of the transmission is below an twelfth chosen threshold value.

8. A method according to Claim 1 wherein the tractor includes one or more steerable ground-engaging members movement of which away from a position corresponding to a straight-ahead position gives rise to a steering angle and wherein the method includes the step of determining that the angle subtended between the trailer and the tractor at the articulated joint attains or exceeds a ninth chosen threshold value when the steering angle exceeds a thirteenth chosen threshold value.

9. A method according to any preceding claim wherein the tractor includes one or more steerable ground-engaging members movement of which away from a position corresponding to a straight-ahead position gives rise to a steering angle, and if the further prevailing conditions include the steering angle of at least one said steerable ground-engaging member of the tractor exceeding a fourteen threshold value.

10. A method according to any of Claim 1 wherein the tractor includes one or more sensors for sensing the lateral acceleration of the tractor and one or more sensors for sensing rotational deceleration of a ground engaging member of the tractor, and wherein the method includes the step of determining that forces acting on at least one ground-engaging member of the tractor attain or exceed a chosen percentage of forces corresponding to a limit of lateral stability of the ground-engaging member when the value of lateral acceleration of the tractor exceeds a fifteenth threshold value or the rotational deceleration of a said ground-engaging member is greater than a sixteenth threshold value.

11. A method of deactivating control of the motion of a coupled tractor-trailer combination in which the tractor includes a drive train having an engine and at least one ground-engaging member driveably connected thereto via an adjustable ratio transmission; and the trailer includes at least one ground engaging member having at least one trailer brake, the method comprising the steps of:
a. detecting termination of one or more preconditions relating to tractor-trailer combination dynamics;
b. detecting termination of one or more further prevailing conditions that are indicative of a likelihood of adverse tractor-trailer combination dynamics; and
c. if termination of at least one said precondition and/or at least one said further prevailing condition is detected, terminating a control action selected from the list including activating the at least one trailer brake and/or adjusting an adjustable parameter of the drive train; and
**characterized in that** the tractor-trailer combination includes an articulated joint connecting the tractor and trailer one to the other and the further conditions include one or more selected from the list comprising the value of a measure of the aggressiveness of deceleration of the tractor-trailer combination becoming less than a twenty-third chosen threshold value or the angle subtended between the trailer and the tractor at the articulated joint becoming less than a twenty-fourth chosen threshold value; or the value of a force acting on at least one ground-engaging member of the tractor becoming less than a chosen percentage of a force corresponding to a limit of lateral stability of the ground-engaging member.

12. A method according to Claim 11 wherein the one or more preconditions relating to tractor-trailer combination dynamics is/are selected from the list including coasting of the tractor-trailer combination, the existence of one or more scenario conditions under which the tractor-trailer combination operates, or the detection of a fault likely to cause rapid deceleration of the tractor and hence the tractor-trailer combination.

13. A method according to Claim 12 including the step of determining the termination of coasting when at least one of the following conditions is met:
d. the difference between a requested and an actual operational speed of a driven ground-engaging member of the tractor becomes less than a seventeenth chosen threshold value; and/or
e. the value of torque applied by the engine to the transmission is greater than an eighteenth chosen threshold value; and/or
f. the fuelling rate of the engine is greater than a nineteen chosen threshold value; and/or
g. endurance braking of the tractor-trailer combination is not occurring.

14. A method according to Claim 11 or Claim 12 wherein the tractor-trailer combination includes one or more sensors of the slope of a surface on which the tractor-trailer combination moves and wherein the method includes the step of determining that one or more scenario conditions on which the tractor-trailer combination operates does not exist when an estimated value of the said slope is less than a twentieth chosen threshold value.

15. A method according to any preceding claim including the step of determining that one or more scenario conditions under which the tractor-trailer combination does not exist when:
(a) the temperature of ambient air in the vicinity of the tractor-trailer combination is greater than a threshold value and/or
(b) the radius of curvature of a turn executed by the tractor-trailer combination is greater than a threshold value.

16. A method according to Claim 13 or Claim 14 wherein the tractor-trailer combination includes one or more sensors respectively of one or more engine and/or transmission faults, one or more sensors of the speed of the engine, one or more sensors of the net engine torque, one or more sensors of the application of one or more automatically applicable brakes of the tractor and/or the trailer and one or more sensors of failure of the drive train, and the method includes determining the termination of a fault likely to cause rapid deceleration of the tractor and hence the tractor-trailer combination when no engine or transmission fault is sensed and the sensed engine speed is greater than a twenty-first threshold value; and the engine torque is greater than a twenty-second threshold value; or the releasing of one or more said automatically applicable brakes is sensed; or sensing of a driveline failure terminates; and the method includes as a result terminating a said control action.

17. A method according to Claim 14 including the step of determining that the aggressiveness of deceleration of the tractor-trailer combination has become less than the twenty-third chosen threshold value when the forward speed of the tractor attains or exceeds a twenty-fifth chosen threshold value and a value corresponding to the transmission ratio of the variable ratio transmission of the tractor exceeds a twenty-sixth chosen threshold value.

18. A method according to any of Claims 11 to 17 including the step of determining that the value of a force acting on at least one ground-engaging member of the tractor is less than a chosen percentage of a force corresponding to a limit of lateral stability of the ground-engaging member when a value of lateral acceleration of the tractor is less than a twenty-seventh chosen threshold value and the value of the rotational deceleration of a said ground-engaging member is greater than a twenty-eighth chosen threshold value.

19. A method according to any of Claims 11 to 18 wherein the method includes the step of measuring a time period during which the trailer brake is activated; determining if the time period is greater than a twenty-ninth chosen threshold value; and deactivating the trailer brake if the twenty-ninth threshold value is exceeded.

20. A method according to any of Claims 11 to 18 wherein the method includes the step of measuring an activation frequency of the trailer brakes; determining if the frequency is greater than a thirtieth chosen threshold value; and deactivating the trailer brake if the thirtieth threshold value is exceeded.

21. A method according to Claims 1 to 20 wherein the seventeenth to twenty-eighth chosen threshold values respectively differ from the first to twelfth, fifteenth and sixteenth chosen threshold values.

22. A method according to any of Claims 3 to 21 wherein at least one said threshold is time-varying and/or at least one said threshold is fixed with respect to time.

23. A method according to Claims 11 to 22 wherein there is a delay in the release of the trailer brake, preferably using a pulse-width modulation (PWM) signal with variable frequency and amplitude, or a simple on/off signal may be employed.

24. A tractor-trailer combination including one or more programmable devices, sensors and actuators, the one or more programmable devices being programmed to implement the steps of the method of any preceding claim.

## Patentansprüche

1. Verfahren zum Regeln der Bewegung einer verbundenen Traktor-Anhänger-Kombination, bei der der Traktor einen Antriebsstrang umfasst, der einen Motor und zumindest ein mit dem Boden eingreifendes Element aufweist, das mit dem Motor mittels eines Getriebes mit einstellbarem Übersetzungsverhältnis antreibbar verbunden ist; und bei der der Anhänger zumindest ein mit dem Boden eingreifendes Element umfasst, das zumindest eine Anhängerbremse aufweist, wobei das Verfahren die Schritte umfasst:
a. Erkennen, ob eine oder mehrere Voraussetzung bezüglich der Dynamik der Traktor-Anhänger-Kombination eintreten;
b. Erkennen, ob eine oder mehrere weitere vorherrschende Bedingungen eintreten, die kennzeichnend für eine Wahrscheinlichkeit einer ungünstigen Dynamik der Traktor-Anhänger-Kombination sind; und
c. wenn zumindest eine Voraussetzung und zumindest eine weitere Bedingung eintreten, Bewirken einer Steuerungsmaßnahme, die aus einer Liste ausgewählt ist, die das Aktivieren der zumindest einen Anhängerbremse und/oder das Einstellen eines einstellbaren Parameters des Antriebsstrangs umfasst, um eine kontrollierte Abbremsung der Traktor-Anhänger-Kombination zu bewirken; und
**dadurch gekennzeichnet, dass** die Traktor-Anhänger-Kombination ein Gelenk umfasst, das den Traktor und den Anhänger miteinander verbindet, und die weiteren vorherrschenden Bedingungen eine oder mehrere Bedingungen umfassen, die aus einer Liste gewählt sind, die umfasst: ein Maß der Aggressivität der Abbremsung der Traktor-Anhänger-Kombination, das einen achten gewählten Grenzwert erreicht oder überschreitet; oder den Winkel zwischen dem Anhänger und dem Traktor am Gelenk, der einen neunten gewählten Grenzwert erreicht oder überschreitet; oder den Wert einer Kraft, die auf zumindest ein mit dem Boden eingreifendes Element des Traktors wirkt und einen gewählten Anteil einer Kraft erreicht oder überschreitet, die einer Grenze der Querstabilität des mit dem Boden eingreifenden Elements entspricht.

2. Verfahren nach Anspruch 1, wobei die eine oder die mehreren Voraussetzungen bezüglich der Dynamik der Traktor-Anhänger-Kombination aus einer Liste gewählt ist/sind, die umfasst: das Laufen der Traktor-Anhänger-Kombination im Leerlauf, das Vorliegen einer oder mehrerer Szenariobedingungen, unter denen die Traktor-Anhänger-Kombination arbeitet, oder das Feststellen eines Fehlers, der wahrscheinlich eine schnelle Abbremsung des Traktors und somit der Traktor-Anhänger-Kombination bewirkt.

3. Verfahren nach Anspruch 2, umfassend den Schritt des Erkennens, dass das Laufen im Leerlauf auftritt, wenn zumindest eine der folgenden Bedingungen zutrifft:
d. der Unterschied zwischen einer angeforderten und einer tatsächlichen Betriebsgeschwindigkeit eines mit dem Boden eingreifenden Elements des Traktors einen ersten gewählten Grenzwert überschreitet; und/oder
e. der Wert eines Moments, das vom Motor auf das Getriebe aufgebracht wird, geringer als ein zweiter gewählter Grenzwert ist; und/oder
f. der Kraftstoffverbrauch des Motors geringer ist als ein dritter gewählter Grenzwert; und/oder
g. eine Dauerbremsung der Traktor-Anhänger-Kombination eintritt; und/oder
h. die gemessene Abbremsung des Traktors größer ist als ein vierter gewählter Grenzwert.

4. Verfahren nach Anspruch 2 oder Anspruch 3, wobei die Traktor-Anhänger-Kombination einen oder mehrere Sensoren für die Neigung einer Oberfläche umfasst, auf der sich die Traktor-Anhänger-Kombination bewegt, und das Verfahren den Schritt des Erkennens umfasst, dass eine oder mehrere Szenariobedingungen vorliegen, unter denen die Traktor-Anhänger-Kombination arbeitet, wenn ein Schätzwert der Neigung einen fünften gewählten Grenzwert erreicht oder überschreitet.

5. Verfahren nach einem der vorangehenden Ansprüche, umfassend den Schritt des Erkennens, dass eine oder mehrere Szenariobedingungen vorliegen, unter denen die Traktor-Anhänger-Kombination arbeitet, wenn:
(a) die Temperatur der Umgebungsluft in der Nähe der Traktor-Anhänger-Kombination geringer als ein Grenzwert ist und/oder
(b) der Krümmungsradius einer Kurve, die von der Traktor-Anhänger-Kombination vollzogen wird, geringer als ein Grenzwert ist.

6. Verfahren nach einem der Ansprüche 2 bis 5, wobei die Traktor-Anhänger-Kombination Sensoren für jeweils einen oder mehrere Motorfehler und/oder Getriebefehler, einen oder mehrere Sensoren für die Geschwindigkeit des Motors, einen oder mehrere Sensoren für das Netto-Motordrehmoment, einen oder mehrere Sensoren für den Einsatz einer oder mehrerer automatisch wirkender Bremsen des Traktors und/oder des Anhängers und einen oder mehrere Sensoren für Fehler des Antriebsstrangs umfasst, wobei das Verfahren das Bestimmen der Erkennung eines Fehlers umfasst, der wahrscheinlich eine schnelle Abbremsung des Traktors und somit der Traktor-Anhänger-Kombination bewirkt, wenn ein Motor- oder ein Getriebefehler erkannt wird und die erkannte Motorgeschwindigkeit geringer als ein sechster Grenzwert ist und das Motordrehmoment geringer als ein siebter Grenzwert ist, oder der Einsatz einer oder mehrerer automatisch wirkender Bremsen erkannt wird, oder ein Antriebsstrangfehler erkannt wird.

7. Verfahren nach Anspruch 1, umfassend den Schritt des Erkennens, dass die Aggressivität der Abbremsung der Traktor-Anhänger-Kombination den achten gewählten Grenzwert erreicht oder überschreitet, wenn ein Zielwert der Abbremsung zumindest eines mit dem Boden eingreifenden Elements des Traktors einen zehnten gewählten Grenzwert überschreitet und eine Vorwärtsgeschwindigkeit des Traktors geringer als ein elfter gewählter Grenzwert ist und das Übersetzungsverhältnis des Getriebes geringer als ein zwölfter gewählter Grenzwert ist.

8. Verfahren nach Anspruch 1, wobei der Traktor ein oder mehrere lenkbare, mit dem Boden eingreifende Elemente umfasst, deren Bewegung aus einer Position, die einer gerade nach vorne gerichteten Position entspricht, einen Lenkwinkel erhöht, und wobei das Verfahren den Schritt des Bestimmens umfasst, dass der Winkel zwischen dem Anhänger und dem Traktor am Gelenk einen neunten gewählten Grenzwert erreicht oder überschreitet, wenn der Lenkwinkel einen dreizehnten gewählten Grenzwert überschreitet.

9. Verfahren nach einem der vorangehenden Ansprüche, wobei der Traktor ein oder mehrere lenkbare, mit dem Boden eingreifende Elemente umfasst, deren Bewegung aus einer Position, die einer gerade nach vorne gerichteten Position entspricht, einen Lenkwinkel erhöht, und die weiteren vorherrschenden Bedingungen den Lenkwinkel des zumindest einen lenkbaren, mit dem Boden eingreifenden Elements des Traktors umfassen, der einen vierzehnten Grenzwert überschreitet.

10. Verfahren nach Anspruch 1, wobei der Traktor einen oder mehrere Sensoren zum Erfassen der Querbeschleunigung des Traktors und einen oder mehrere Sensoren zum Erfassen der Rotationsverzögerung eines mit dem Boden eingreifenden Elements des Traktors umfasst, und wobei das Verfahren den Schritt des Bestimmens umfasst, dass Kräfte, die auf das zumindest eine mit dem Boden eingreifende Element des Traktors wirken, einen gewählten Anteil von Kräften erreichen oder überschreiten, die einer Grenze der Querstabilität des mit dem Boden eingreifenden Elements entsprechen, wenn der Wert der Querbeschleunigung des Traktors einen fünfzehnten Grenzwert überschreitet oder die Rotationsverzögerung des mit dem Boden eingreifenden Elements größer als ein sechzehnter Grenzwert ist.

11. Verfahren zum Deaktivieren einer Regelung der Bewegung einer verbundenen Traktor-Anhänger-Kombination, bei der der Traktor einen Antriebsstrang umfasst, der einen Motor und zumindest ein mit dem Boden eingreifendes Element aufweist, das mit dem Motor mittels eines Getriebes mit einstellbarem Übersetzungsverhältnis antreibbar verbunden ist; und bei der der Anhänger zumindest ein mit dem Boden eingreifendes Element umfasst, das zumindest eine Anhängerbremse aufweist, wobei das Verfahren die Schritte umfasst:
a. Erkennen der Beendigung einer oder mehrerer Voraussetzungen bezüglich der Dynamik der Traktor-Anhänger-Kombination;
b. Erkennen der Beendigung einer oder mehrerer weiterer vorherrschender Bedingungen, die kennzeichnend für eine Wahrscheinlichkeit einer ungünstigen Dynamik der Traktor-Anhänger-Kombination sind; und
c. wenn die Beendigung zumindest einer Voraussetzung und/oder zumindest einer weiteren vorherrschenden Bedingung erkannt wird, Beendigen einer Steuerungsmaßnahme, die aus einer Liste ausgewählt ist, die das Aktivieren der zumindest einen Anhängerbremse und/oder das Einstellen eines einstellbaren Parameters des Antriebsstrangs umfasst; und
**dadurch gekennzeichnet, dass** die Traktor-Anhänger-Kombination ein Gelenk umfasst, das den Traktor und den Anhänger miteinander verbindet, und die weiteren Bedingungen zumindest eine oder mehrere Bedingungen umfassen, die aus einer Liste gewählt sind, die umfasst: den Wert eines Maßes der Aggressivität der Abbremsung der Traktor-Anhänger-Kombination, der kleiner als ein dreiundzwanzigster gewählter Grenzwert wird, oder den Winkel zwischen dem Anhänger und dem Traktor am Gelenk, der kleiner als ein vierundzwanzigster gewählter Grenzwert wird; oder der Wert einer Kraft, die auf das zumindest eine mit dem Boden eingreifende Element des Traktors wirkt und die kleiner als ein gewählter Anteil einer Kraft wird, der einer Grenze der Querstabilität des mit dem Boden eingreifenden Elements entspricht.

12. Verfahren nach Anspruch 11, wobei die eine oder die mehreren Voraussetzungen bezüglich der Dynamik der Traktor-Anhänger-Kombination aus einer Liste gewählt ist/sind, die umfasst: das Laufen der Traktor-Anhänger-Kombination im Leerlauf, das Vorliegen einer oder mehrerer Szenariobedingungen, unter denen die Traktor-Anhänger-Kombination arbeitet, oder das Feststellen eines Fehlers, der wahrscheinlich eine schnelle Abbremsung des Traktors und somit der Traktor-Anhänger-Kombination bewirkt.

13. Verfahren nach Anspruch 12 umfassend den Schritt des Erkennens der Beendigung des Laufens im Leerlauf, wenn zumindest eine der folgenden Bedingungen zutrifft:
d. der Unterschied zwischen einer angeforderten und einer tatsächlichen Betriebsgeschwindigkeit eines angetriebenen, mit dem Boden eingreifenden Elements des Traktors kleiner wird als ein siebzehnter gewählter Grenzwert; und/oder
e. der Wert eines Moments, das vom Motor auf das Getriebe aufgebracht wird, größer als ein achtzehnter gewählter Grenzwert ist; und/oder
f. der Kraftstoffverbrauch des Motors größer als ein neunzehnter gewählter Grenzwert ist; und/oder
g. eine Dauerbremsung der Traktor-Anhänger-Kombination nicht eintritt.

14. Verfahren nach Anspruch 11 oder Anspruch 12, wobei die Traktor-Anhänger-Kombination einen oder mehrere Sensoren für die Neigung einer Oberfläche umfasst, auf der sich die Traktor-Anhänger-Kombination bewegt, und wobei das Verfahren den Schritt umfasst, zu erkennen, dass eine oder mehrere Szenariobedingungen, unter denen die Traktor-Anhänger-Kombination arbeitet, nicht vorliegen, wenn ein Schätzwert der Neigung geringer als ein zwanzigster gewählter Grenzwert ist.

15. Verfahren nach einem der vorangehenden Ansprüche, umfassend den Schritt des Erkennens, dass eine oder mehrere Szenariobedingungen, unter denen die Traktor-Anhänger-Kombination arbeitet, nicht vorliegt, wenn:
(a) die Temperatur der Umgebungsluft in der Nähe der Traktor-Anhänger-Kombination größer als ein Grenzwert ist und/oder
(b) der Krümmungsradius einer Kurve, die von der Traktor-Anhänger-Kombination vollzogen wird, größer als ein Grenzwert ist.

16. Verfahren nach Anspruch 13 oder Anspruch 14, wobei die Traktor-Anhänger-Kombination einen oder mehrere Sensoren für jeweils einen oder mehrere Motorfehler und/oder Getriebefehler, einen oder mehrere Sensoren für die Geschwindigkeit des Motors, einen oder mehrere Sensoren für das Netto-Motordrehmoment, einen oder mehrere Sensoren für den Einsatz einer oder mehrerer automatisch wirkender Bremsen des Traktors und/oder des Anhängers, und einen oder mehrere Sensoren für einen Fehler des Antriebsstrangs umfasst, und das Verfahren das Erkennen der Beendigung eines Fehlers umfasst, der wahrscheinlich eine schnellen Abbremsung des Traktors und somit der Traktor-Anhänger-Kombination bewirkt, wenn kein Motor- oder Getriebefehler erkannt wird und die erkannte Motorgeschwindigkeit größer als ein einundzwanzigster Grenzwert ist; und das Motordrehmoment größer als ein zweiundzwanzigster Grenzwert ist; oder das Lösen einer oder mehrerer der automatisch wirkenden Bremsen erkannt wird; oder das Erkennen eines Fehlers des Antriebsstrangs aufhört; und das Verfahren als Folge die Beendigung einer Steuerungsmaßnahme umfasst.

17. Verfahren nach Anspruch 14, umfassend den Schritt des Erkennens, dass die Aggressivität der Abbremsung der Traktor-Anhänger-Kombination geringer als ein dreiundzwanzigster gewählter Grenzwert geworden ist, wenn die Vorwärtsgeschwindigkeit des Traktors einen fünfundzwanzigsten gewählten Grenzwert erreicht oder überschreitet, und ein Wert, der dem Übersetzungsverhältnis des Getriebes des Traktors mit einstellbarem Übersetzungsverhältnis entspricht, einen sechsundzwanzigsten gewählten Grenzwert überschreitet.

18. Verfahren nach einem der Ansprüche 11 bis 17, umfassend den Schritt des Erkennens, dass der Wert einer Kraft, die auf zumindest ein mit dem Boden eingreifendes Element des Traktors wirkt, kleiner als ein gewählter Anteil einer Kraft ist, der einer Grenze der Querstabilität des mit dem Boden eingreifenden Elements entspricht, wenn ein Wert der Querbeschleunigung des Traktors geringer als ein sechsundzwanzigster gewählter Grenzwert ist und der Wert der Rotationsverzögerung des mit dem Boden eingreifenden Elements größer als ein achtundzwanzigster gewählter Grenzwert ist.

19. Verfahren nach einem der Ansprüche 11 bis 18, wobei das Verfahren den Schritt des Messens einer Zeitdauer, während der die Anhängerbremse aktiviert ist; des Erkennens, ob die Zeitdauer größer als ein neunundzwanzigster gewählter Grenzwert ist; und des Deaktivierens der Anhängerbremse, wenn der neunundzwanzigste Grenzwert überschritten wird, umfasst.

20. Verfahren nach einem der Ansprüche 11 bis 18, wobei das Verfahren den Schritt des Messens einer Aktivierungsfrequenz der Anhängerbremsen; des Erkennens, ob die Frequenz größer als ein dreißigster gewählter Grenzwert ist; und des Lösens der Anhängerbremse, wenn der dreißigste Grenzwert überschritten wird, umfasst.

21. Verfahren nach den Ansprüchen 1 bis 20, wobei sich der siebzehnte bis achtundzwanzigste gewählte Grenzwert jeweils vom ersten bis zwölften, fünfzehnten und sechszehnten gewählten Grenzwert unterscheidet.

22. Verfahren nach einem der Ansprüche 3 bis 21, wobei zumindest ein Grenzwert zeitlich veränderlich ist und/oder zumindest ein Grenzwert in Bezug auf die Zeit festgelegt ist.

23. Verfahren nach den Ansprüchen 11 bis 22, wobei es eine Verzögerung beim Lösen der Anhängerbremse gibt, vorzugsweise unter Verwendung eines Tastverhältnis (PWM)-Signals mit variabler Frequenz und Amplitude, oder eines einfachen an/aus-Signals.

24. Traktor-Anhänger-Kombination mit einer oder mehreren programmierbaren Vorrichtungen, Sensoren und Antrieben, wobei die eine oder mehreren programmierbaren Vorrichtungen programmiert sind, um die Schritte des Verfahrens nach einem der vorangehenden Ansprüche umzusetzen.

## Revendications

1. Méthode de contrôle-commande du mouvement d'une combinaison tracteur-remorque accouplés, où le tracteur comprend une transmission secondaire avec moteur et au moins un membre entrant en contact avec le sol qui est relié en entraînement à celui-ci via une transmission à rapport réglable ; et la remorque comprend au moins un membre entrant en contact avec le sol pourvu d'au moins un frein de remorque, la méthode comprenant les étapes:
a. de détection si une ou plusieurs des conditions préalables liées à la dynamique de la combinaison tracteur-remorque a/ont lieu ;
b. de détection si une ou plusieurs conditions dominantes supplémentaires indiquant la probabilité d'un dynamique tracteur-remorque défavorable a/ont lieu ; et
c. si au moins une des conditions préalables et au moins une dite condition supplémentaire ont lieu, de réalisation d'une action de contrôle-commande sélectionnée dans la liste comprenant l'activation de l'au moins un frein de remorque et/ou le réglage d'un paramètre réglable de la transmission secondaire afin d'effectuer une décélération contrôlée de la combinaison tracteur-remorque ; et
**caractérisée en ce que** la combinaison tracteur-remorque comprend un raccord articulé reliant le tracteur et la remorque l'un à l'autre et les conditions dominantes supplémentaires comprennent une ou plusieurs dans la liste comprenant une mesure de l'agressivité de la décélération de la combinaison tracteur-remorque atteignant ou dépassant une huitième valeur de seuil choisie ; ou l'angle sous-tendu entre la remorque et le tracteur au niveau du raccord articulé atteignant ou dépassant une neuvième valeur de seuil choisie ; ou la valeur d'une force agissant sur au moins un membre entrant en contact avec le sol atteignant ou dépassant un pourcentage d'une force correspondant à une limite de stabilité latérale du membre entrant en contact avec le sol.

2. Méthode selon la revendication 1, selon laquelle l'une ou plusieurs des conditions préalables liées à la dynamique de la combinaison tracteur-remorque est/(sont) sélectionnée(s) dans la liste comprenant l'avancement en roue libre de la combinaison tracteur-remorque, l'existence d'une ou plusieurs conditions de scénario dans lesquelles fonctionne la combinaison tracteur-remorque, ou la détection d'un défaut susceptible de provoquer une décélération rapide du tracteur et donc de la combinaison tracteur-remorque.

3. Méthode selon la revendication 2, comprenant l'étape de détermination si l'avancement en roue libre a lieu lorsque au moins une des conditions suivantes est remplie :
d. la différence entre une vitesse requise et une vitesse opérationnelle effective d'un membre entraîné entrant en contact avec le sol dépasse une première valeur de seuil choisie ; et/ou
e. la valeur du couple appliqué par le moteur à la transmission est inférieure à une deuxième valeur de seuil choisie ; et/ou
f. la vitesse d'alimentation en carburant du moteur est inférieure à une troisième valeur de seuil choisie ; et/ou
g. le freinage d'endurance de la combinaison tracteur-remorque a lieu ; et/ou
h. la décélération du tracteur est mesurée comme étant supérieure à une quatrième valeur de seuil choisie.

4. Méthode selon la revendication 2 ou 3, selon laquelle la combinaison tracteur-remorque comprend un ou plusieurs capteurs de la pente de la surface sur laquelle se déplace la combinaison tracteur-remorque et la méthode comprend l'étape de détermination qu'il existe une ou plusieurs conditions de scénario dans lesquelles la combinaison tracteur-remorque fonctionne lorsqu'une valeur estimée de ladite pente atteint ou dépasse une cinquième valeur de seuil choisie.

5. Méthode selon l'une quelconque des revendications précédentes comprenant l'étape de détermination qu'il existe une ou plusieurs conditions de scénario dans lesquelles la combinaison tracteur-remorque fonctionne lorsque :
(a) la température de l'air ambiant au voisinage de la combinaison tracteur-remorque est inférieure à une valeur de seuil et/ou
(b) le rayon de courbure d'un virage effectué par la combinaison tracteur-remorque est inférieur à une valeur de seuil.

6. Méthode selon l'une quelconque des revendications 2 à 5, selon laquelle la combinaison tracteur-remorque comprend des capteurs correspondant, respectivement, à un ou plusieurs défauts du moteur et/ou de la transmission, un ou plusieurs capteurs de la vitesse du moteur, un ou plusieurs capteurs du couple net du moteur, un ou plusieurs capteurs de l'application d'un ou plusieurs freins automatiquement applicables du tracteur et/ou de la remorque et un ou plusieurs capteurs de défaillance de la transmission secondaire, la méthode comprenant la détermination de la détection d'un défaut susceptible de provoquer une décélération rapide du tracteur et donc de la combinaison tracteur-remorque lorsqu'un défaut du moteur ou de la transmission est détecté et la vitesse du moteur détectée est inférieure à une sixième valeur de seuil et le couple du moteur est inférieur à une septième valeur de seuil ou l'application de l'un ou plusieurs desdits freins applicables automatiquement est détecté ou une défaillance de la chaîne d'entraînement est détectée.

7. Méthode selon la revendication 1, comprenant l'étape de détermination si l'agressivité de la décélération de la combinaison tracteur-remorque atteint ou dépasse la huitième valeur de seuil choisie lorsqu'une valeur cible de la décélération d'au moins un membre entrant en contact avec le sol dépasse une dixième valeur de seuil choisie et la vitesse d'avance du tracteur est inférieure à une onzième valeur de seuil choisie et le rapport de transmission est inférieur à une douzième valeur de seuil choisie.

8. Méthode selon la revendication 1, selon laquelle le tracteur comprend un ou plusieurs membres orientables entrant en contact avec le sol dont le mouvement d'éloignement d'une position correspondant à la position droit devant génère un angle de pilotage et selon laquelle la méthode comprend l'étape de détermination si l'angle sous-tendu entre la remorque et le tracteur au niveau du raccord articulé atteint ou dépasse une neuvième valeur de seuil choisie lorsque l'angle de braquage dépasse une treizième valeur de seuil choisie.

9. Méthode selon l'une quelconque des revendications précédentes, selon laquelle le tracteur comprend un ou plusieurs membres orientables entrant en contact avec le sol et dont le mouvement d'éloignement d'une position correspondant à la position orientée droit devant génère un angle de braquage, et si les conditions dominantes supplémentaires comprennent l'angle de braquage d'au moins un des membres orientables entrant en contact avec le sol dépasse une quatorzième valeur de seuil.

10. Méthode selon la revendication 1, selon laquelle le tracteur comprend un ou plusieurs capteurs qui détectent l'accélération du tracteur et un ou plusieurs capteurs qui détectent la décélération rotationnelle d'un membre entrant en contact avec le sol du tracteur, et comprenant l'étape de détermination si des forces agissant sur au moins un membre entrant en contact avec le sol du tracteur atteignent ou dépassent un pourcentage choisi des forces correspondant à une limite de stabilité latérale du membre entrant en contact avec le sol lorsque la valeur de l'accélération latérale du tracteur dépasse une quinzième valeur de seuil ou la décélération rotationnelle dudit membre entrant en contact avec le sol du tracteur est supérieure à une seizième valeur de seuil.

11. Méthode de désactivation du contrôle-commande du mouvement d'une combinaison tracteur-remorque accouplés, où le tracteur comprend une transmission secondaire avec moteur et au moins un membre entrant en contact avec le sol qui est relié en entraînement à celui-ci via un rapport de transmission réglable ; et la remorque comprend au moins un membre entrant en contact avec le sol pourvu d'au moins un frein de remorque, la méthode comprenant les étapes de :
a. détection de la fin d'une ou plusieurs des conditions préalables liées à la dynamique de la combinaison tracteur-remorque ;
b. détecter la fin d'une ou plusieurs conditions dominantes supplémentaires indiquant une probabilité d'un dynamique tracteur-remorque défavorable ; et
c. si la fin d'au moins une des conditions préalables et/ou au moins une dite condition dominante supplémentaire est détectée, terminer une action de contrôle-commande sélectionnée dans la liste comprenant l'activation de l'au moins un frein de remorque et/ou régler un paramètre réglable de la transmission secondaire ; et
**caractérisée en ce que** la combinaison tracteur-remorque comprend un raccord articulé reliant le tracteur et la remorque l'un à l'autre et les conditions supplémentaires comprennent une ou plusieurs de celles de la liste comprenant la valeur d'une mesure de l'agressivité de la décélération de la combinaison tracteur-remorque devenant inférieure à une vingt-troisième valeur de seuil choisie ou l'angle sous-tendu entre la remorque et le tracteur au niveau du raccord articulé devenant inférieur à une vingt-quatrième valeur de seuil choisie ; ou la valeur d'une force agissant sur au moins un membre entrant en contact avec le sol devenant inférieure à un pourcentage d'une force correspondant à une limite de stabilité latérale du membre entrant en contact avec le sol.

12. Méthode selon la revendication 11, selon laquelle l'une ou plusieurs conditions préalables liées à la dynamique de la combinaison tracteur-remorque est/(sont) sélectionnée(s) dans une liste comprenant l'avancement en roue libre de la combinaison tracteur-remorque, l'existence d'une ou plusieurs conditions de scénario dans lesquelles fonctionne la combinaison tracteur-remorque, ou la détection d'un défaut susceptible de provoquer une décélération rapide du tracteur et donc de la combinaison tracteur-remorque.

13. Méthode selon la revendication 12, comprenant l'étape de détermination si l'avancement en roue libre a pris fin lorsque au moins une des conditions suivantes est remplie :
d. la différence entre une vitesse requise et une vitesse opérationnelle effective d'un membre entraîné entrant en contact avec le sol devient inférieure à une dix-septième valeur de seuil choisie ; et/ou
e. la valeur du couple appliqué par le moteur à la transmission est supérieure à une dix-huitième valeur de seuil choisie ; et/ou
f. la vitesse d'alimentation en carburant du moteur est supérieure à une dix-neuvième valeur de seuil choisie ; et/ou
g. le freinage d'endurance de la combinaison tracteur-remorque n'a pas lieu.

14. Méthode selon la revendication 11 ou 12, selon laquelle la combinaison tracteur-remorque comprend un ou plusieurs capteurs de la pente de la surface sur laquelle se déplace la combinaison tracteur-remorque et la méthode comprend l'étape de détermination qu'il n'existe pas une ou plusieurs conditions de scénario dans lesquelles la combinaison tracteur-remorque fonctionne lorsqu'une valeur estimée de ladite pente est inférieure à une vingtième valeur de seuil choisie.

15. Méthode selon l'une quelconque des revendications précédentes comprenant l'étape de détermination s'il n'existe pas une ou plusieurs conditions de scénario dans lesquelles la combinaison tracteur-remorque is operating fonctionne lorsque :
(a) la température de l'air ambiant au voisinage de la combinaison tracteur-remorque est supérieure à une valeur de seuil et/ou
(b) le rayon de courbure d'un virage effectué par la combinaison tracteur-remorque est supérieur à une valeur de seuil.

16. Méthode selon la revendication 13 ou 14, selon laquelle la combinaison tracteur-remorque comprend un ou plusieurs capteurs correspondant, respectivement, à un ou plusieurs défauts du moteur et/ou de la transmission, un ou plusieurs capteurs de la vitesse du moteur, un ou plusieurs capteurs du couple net du moteur, un ou plusieurs capteurs de l'application d'un ou plusieurs freins automatiquement applicables du tracteur et/ou de la remorque et un ou plusieurs capteurs de défaillance de la transmission secondaire, et la méthode comprenant la détermination de la fin d'un défaut susceptible de provoquer une décélération rapide du tracteur et donc de la combinaison tracteur-remorque lorsque aucun défaut du moteur ou de la transmission n'est détecté et la vitesse du moteur détectée est supérieure à une vingt-et-unième valeur de seuil ; et le couple du moteur est supérieur à une vingt-deuxième valeur de seuil ; ou la libération de l'un ou plusieurs desdits freins applicables automatiquement est détecté ; ou la détection qu'une défaillance de la chaîne d'entraînement est terminée ; et la méthode comprend par conséquent l'action de mettre fin à une dite action de contrôle-commande.

17. Méthode selon la revendication 14, comprenant l'étape de détermination si l'agressivité de la décélération de la combinaison tracteur-remorque est devenue inférieure à la vingt-troisième valeur de seuil choisie lorsque la vitesse d'avance du tracteur atteint ou dépasse une vingt-cinquième valeur de seuil choisie et une valeur correspondant au rapport de transmission de la transmission à rapport variable du tracteur dépasse une vingt-sixième valeur de seuil choisie.

18. Méthode selon l'une quelconque des revendications 11 à 17, comprenant l'étape de détermination si la valeur d'une force agissant sur au moins un membre entrant en contact avec le sol du tracteur est inférieure à un pourcentage choisi d'une force correspondant à une limite de stabilité latérale du membre entrant en contact avec le sol lorsqu'une valeur de l'accélération latérale du tracteur est inférieure à une vingt-septième valeur de seuil choisie et la valeur de la décélération rotationnelle dudit membre entrant en contact avec le sol est supérieure à une vingt-huitième valeur de seuil choisie.

19. Méthode selon l'une quelconque des revendications 11 à 18, comprenant l'étape de mesure d'une durée pendant laquelle le frein de remorque est activé ; de détermination si la durée est supérieure à une vingt-neuvième valeur de seuil choisie ; et de désactivation du frein de remorque si la vingt-neuvième valeur de seuil est dépassée.

20. Méthode selon l'une quelconque des revendications 11 à 18, comprenant l'étape de mesurage d'une fréquence d'activation des freins de remorque ; de détermination si la fréquence est supérieure à une trentième valeur de seuil choisie ; et désactivation du frein de remorque si la trentième valeur de seuil est dépassée.

21. Méthode selon les revendications 1 à 20, selon laquelle la dix-septième jusqu'à la vingt-huitième valeur de seuil diffèrent, respectivement, de la première à la douzième, quinzième et seizième des valeurs de seuil choisies.

22. Méthode selon l'une quelconque des revendications 3 à 21, selon laquelle au moins un seuil varie avec le temps et/ou au moins un seuil est fixé par rapport au temps.

23. Méthode selon les revendications 11 à 22, selon laquelle il existe un retard dans la libération du frein de remorque, préférentiellement en utilisant un signal de modulation en largeur d'impulsion (MLI) de fréquence et amplitude variables, ou d'un simple signal tout ou rien.

24. Combinaison tracteur-remorque comprenant un ou plusieurs dispositifs programmables, capteurs et actionneurs, l'un ou plusieurs dispositifs programmables étant programmé(s) pour mettre en œuvre les étapes de la méthode selon l'une quelconque des revendications précédentes.
